(19) Europäisches Patentamt
European Patent Office
Office européen des brevets

(11) **EP 3 929 617 B1**

(12) **EUROPÄISCHE PATENTSCHRIFT**

(45) Veröffentlichungstag und Bekanntmachung des Hinweises auf die Patenterteilung:
**05.07.2023   Patentblatt 2023/27**

(21) Anmeldenummer: **20182445.5**

(22) Anmeldetag: **26.06.2020**

(51) Internationale Patentklassifikation (IPC):
*G01S 7/484* (2006.01)     *G01S 7/4865* (2020.01)
*G01S 17/10* (2020.01)     *G01S 17/42* (2006.01)
*G01S 17/89* (2020.01)

(52) Gemeinsame Patentklassifikation (CPC):
**G01S 7/484; G01S 7/4865; G01S 17/10;
G01S 17/42; G01S 17/89**

(54) **LASERSCANNER UND VERFAHREN ZUM VERMESSEN EINER UMGEBUNG**

LASER SCANNER AND METHOD FOR MEASURING AN AREA

BALAYEUR LASER ET PROCÉDÉ DE MESURE D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.12.2021   Patentblatt 2021/52**

(73) Patentinhaber: **RIEGL Laser Measurement Systems GmbH**
**3580 Horn (AT)**

(72) Erfinder:
• **RIEGER, Peter**
**3824 Grossau (AT)**

• **PFENNIGBAUER, Martin**
**3430 Tulln (AT)**

(74) Vertreter: **Weiser & Voith**
**Patentanwälte Partnerschaft**
**Kopfgasse 7**
**1130 Wien (AT)**

(56) Entgegenhaltungen:
**EP-A1- 3 443 381          EP-B1- 3 443 381
US-A1- 2009 122 295     US-A1- 2015 226 853
US-A1- 2017 269 209**

**Beschreibung**

Die vorliegende Erfindung betrifft einen Laserscanner zum Vermessen einer Umgebung, der dazu ausgebildet ist, mit einer variablen Impulswiederholrate Laserimpulse als zeilenweise mit einer Winkelgeschwindigkeit über die Umgebung geführten Messstrahl auszusenden, um aufeinanderfolgende Abtastzeilen von Abtastpunkten zu erzeugen und für jeden Abtastpunkt durch Laufzeitmessung des daran reflektierten Laserimpulses einen Entfernungsmesswert zum Laserscanner zu ermitteln, wobei die Impulswiederholrate in zumindest einem Teilabschnitt einer aktuellen Abtastzeile von zumindest einem Entfernungsmesswert zumindest einer vorhergehenden Abtastzeile abhängt. Die Erfindung betrifft ferner ein Verfahren zum Vermessen einer Umgebung mit einem solchen Laserscanner.

Laserscanner dieser Art werden beispielsweise von einem Flugzeug oder Schiff mitgeführt, um den Erdboden oder Meeresgrund topographisch zu vermessen. Es ist auch möglich, einen solchen Laserscanner auf einem Landfahrzeug zu montieren, um z.B. Hausfassaden, Straßenschluchten oder Tunnel im Vorbeifahren zu vermessen. Der Laserscanner kann auch stationär aufgestellt werden, beispielsweise in einem Tag- oder Untertagbergwerk, um dessen Abbau zu vermessen. Die vom Laserscanner in einem Koordinatensystem ermittelten Abtastpunkte bilden ein 3D-Punktemodell der Umgebung, welches das Vermessungsergebnis darstellt.

Die US 2017/0269209 A1 beschreibt einen Laserscanner und ein Verfahren zur Kollisionsvermeidung auf autonomen Fahrzeugen gemäß dem Oberbegriff der Ansprüche 1 und 8.

Für nahe Objekte wird die Impulswiederholrate reduziert, um die Scanauflösung zu reduzieren.

Für jede Abtastzeile wird der Messstrahl über einen Winkel verschwenkt, was einen vom Laserscanner aus divergierenden Scanfächer bildet. Bei mobilen, fahrzeuggestützten Laserscannern wird der Scanfächer durch die Fortbewegung des Fahrzeugs über die Umgebung geführt, bei stationären Laserscannern z.B. mittels eines Drehgestells oder Drehspiegels rundum geschwenkt, um die Umgebung zeilenweise abzutasten. Aufgrund der Divergenz des Scanfächers bewegt sich selbst bei einer konstanten Winkelgeschwindigkeit des Messstrahles dessen Auftreffpunkt auf einer z.B. ebenen Umgebung mit variierender Geschwindigkeit vorwärts, genauer gemäß $1/\cos^2$ des aktuellen Ablenkwinkels $\varphi$. Wenn die Laserimpulse mit einer konstanten Impulswiederholrate ausgesandt werden, haben ihre Abtastpunkte daher variierende gegenseitige Abstände entlang der Abtastzeile. Wenn die Winkelgeschwindigkeit des Messstrahls variiert, z.B. bei Verwendung eines schwingenden Ablenkspiegels, tritt eine zusätzliche Verzerrung der Abstände über die Abtastzeile auf. Aufgrund der Scanfächerdivergenz hängen überdies die Länge einer Abtastzeile und damit die Dichte der Abtastpunke in der Abtastzeile von der Entfernung der Abtastzeile vom Laserscanner ab.

All diese Effekte führen dazu, dass die Abtastpunkte ungleichmäßig über die Umgebung verteilt sind. Wird die Umgebung beispielsweise mit einem luftgestützten Laserscanner in nebeneinanderliegenden Abtaststreifen abgeflogen, von denen jeder eine Folge von querverlaufenden Abtastzeilen enthält, dann ist die lokale Dichte der Abtastpunkte an den Streifenrändern geringer. Die Umgebung muss dann mit teilüberlappenden Abtaststreifen abgeflogen werden, um eine ausreichende Abtastpunktdichte und damit Ortsauflösung des 3D-Punktemodells der Umgebung in allen Bereichen zu erzielen. Auch muss die Flughöhe ständig an den Terrainverlauf angepasst werden, um eine zu hohe Abtastpunktdichte bei zu geringer Flughöhe und umgekehrt zu vermeiden.

Im Ergebnis bedingt die ungleichmäßige, entfernungsabhängige Abtastpunkteverteilung herkömmlicher Laserscanner zusätzlichen Arbeitsaufwand bei der Planung und Durchführung einer Vermessungsaufgabe, um ein 3D-Punktemodell mit einer gesicherten Auflösung zu erzeugen.

Die Erfindung setzt sich zum Ziel, einen Laserscanner und ein Verfahren zum Vermessen einer Umgebung zu schaffen, welche die Nachteile des bekannten Standes der Technik überwinden und auf rasche, arbeits- und kostensparende Weise ein 3D-Punktemodell der Umgebung mit einer guten Auflösung erstellen können.

Dieses Ziel wird in einem ersten Aspekt der Erfindung mit einem Laserscanner mit den Merkmalen des Anspruchs 1 erreicht.

Die Erfindung berücksichtigt Entfernungsinformation aus einer vorhergehenden Abtastzeile zur Steuerung der Impulswiederholrate in einer aktuellen Abtastzeile. Dadurch kann beispielsweise bei Flug oder Fahrt über abfallendem bzw. sich entfernendem Terrain die Impulswiederholrate automatisch erhöht und bei ansteigendem bzw. sich näherndem Terrain automatisch reduziert werden, um die Abtastpunktedichte zu vergleichmäßigen.

In einer bevorzugten Ausführungsform der Erfindung, in der jede Abtastzeile in dieselbe Anzahl von Teilabschnitten unterteilt ist, hängt die Impulswiederholrate in jedem Teilabschnitt einer aktuellen Abtastzeile von zumindest einem Entfernungsmesswert desselben Teilabschnitts zumindest einer vorhergehenden Abtastzeile ab.

Die Teilabschnitte einer Abtastzeile können dabei auf verschiedenste Art definiert sein. In einer ersten Variante entspricht jeder Teilabschnitt einem gleich großen Teilwinkel des Scanfächers, der diese Abtastzeile erzeugt. In einer zweiten Variante entspricht jeder Teilabschnitt einem gleich langen Zeitabschnitt während der Bewegung des Messstrahls über die Abtastzeile. In einer dritten Variante ist jeder Teilabschnitt durch die gleiche Anzahl von den Abtastpunkten darin definiert.

In einer vierten Variante nimmt jeder Teilabschnitt die gleiche Teillänge in der Abtastzeile ein, was für jede vorhergehende Abtastzeile einfach gemessen werden kann, für die aktuelle Abtastzeile hingegen eine Prädiktion auf Basis der Annahme darstellt, dass sie etwa so wie die vorhergehende(n) verläuft. Die Teilabschnitte einer Abtastzeile können daher alle entweder gleich lang sein oder unterschiedlich.

Die Anzahl an Teilabschnitten, in die eine Abtastzeile unterteilt wird, kann beliebig gewählt werden, von eins, zwei, usw. bis zu Hunderten, Tausenden oder mehr. Je höher die Anzahl an Teilabschnitten einer Abtastzeile, z.B. tausende Teilabschnitte, von denen jeder jeweils nur einen, zwei oder ganz wenige Abtastpunkte enthält, desto feiner ist das Entfernungsmesswert-Profil über eine Abtastzeile in den "Einheiten" der Teilabschnitte aufgelöst, d.h. "diskretisiert".

Das bzw. die solcherart teilabschnitt-diskretisierte(n) Entfernungsmesswert-Profil(e) einer oder mehrerer vorhergehender Abtastzeilen, insbesondere jenes der jeweils letzten Abtastzeile, werden in der genannten bevorzugten Ausführungsform der Erfindung zur Erstellung eines über die Abtastzeile variierenden Impulswiederholraten-Profils herangezogen. Bei einer sehr feinen Auflösung der Abtastzeilen kann damit die Impulswiederholrate falls gewünscht sogar von Abtastpunkt zu Abtastpunkt variiert werden, und zwar auf Basis der Entfernungsmesswerte des/der benachbarten Abtastpunkte(s) der vergangenen Abtastzeile (n) .

Die erfindungsgemäße Variation der Impulswiederholrate auf Basis von Entfernungsmesswerten vergangener Abtastzeilen, insbesondere die Berechnung eines Impulswiederholraten-Profils für die aktuelle Abtastzeile auf Basis von Entfernungsmesswert-Profilen einer oder mehrerer vorhergehender Abtastzeilen, kann auch dazu verwendet werden, die Abtastpunkte möglichst gleichmäßig über die zu vermessende Umgebung zu verteilen. In der Erfindung wird dazu die beschriebene Abhängigkeit der Impulswiederholrate von zumindest einem Entfernungsmesswert zumindest einer vorhergehenden Abtastzeile derart gewählt, dass die Abtastpunke in der aktuellen Abtastzeile im Wesentlichen gleichen Abstände haben. Alternativ oder zusätzlich kann die beschriebene Abhängigkeit der Impulswiederholrate von zumindest einem Entfernungsmesswert zumindest einer vorhergehenden Abtastzeile auch derart gewählt sein, dass die lokale Dichte der Abtastpunkte in einer Draufsicht der Umgebung in Lotrichtung zumindest über mehrere aufeinanderfolgende Abtastzeilen im Wesentlichen konstant ist.

Beispielsweise kann das Impulswiederholraten-Profil über die aktuelle Abtastzeile etwa dem Entfernungsmesswert-Profil der letzten Abtastzeile gewichtet mit $1/\cos^2\varphi$ folgen, wenn eine weit entfernte Umgebung näherungsweise als eben betrachtet wird und $\varphi$ der aktuelle Ablenk- bzw. Aussendewinkel des Messstrahls gegenüber der Normalen auf diese Näherungsebene ist. Auch andere Abhängigkeitsfunktionen können gewählt werden, welche das/die teilabschnitts-diskretisierte(n) Entfernungsmesswert-Profil(e) einer oder mehrerer letzter Abtastzeilen für die Berechnung des Impulswiederholraten-Profils der aktuellen Abtastzeile derart berücksichtigen, dass die Abtastpunkte möglichst gleichmäßig über die Umgebung verteilt sind.

Darüber hinaus kann die erfindungsgemäße Berücksichtigung von Entfernungsmesswerten aus vergangenen Abtastzeilen für das Impulswiederholraten-Profil der aktuelle Abtastzeile auch dazu verwendet werden, sogenannte "Blind Ranges" bei der Vermessung der Umgebung zu vermeiden. Blind Ranges treten bei einem Laserscanner konstruktionsbedingt dadurch auf, dass das Empfangen eines reflektierten früheren Laserimpulses rund um den Zeitpunkt des Aussendens eines späteren Impulses nicht möglich ist, und zwar weil die Empfangselektronik durch Nahreflexionen eines ausgesandten Impulses an Komponenten des Laserscanners, z.B. Gehäuse- oder Montageteilen oder einem Austrittsfenster desselben, gesättigt bzw. überlastet und damit "blind" für den Empfang eines reflektierten Impulses ist. Dieser Effekt tritt bei jedem Ziel auf, das in der Nähe einer sogenannten "MTA-Zonengrenze" liegt: Bei hoher Impulswiederholrate oder größerer Zielentfernung wird beispielsweise schon der nächste Laserimpuls ausgesandt, noch bevor der reflektierte erste Sendeimpuls empfangen wird. Dies wird als "Multiple Time Around"- (MTA) bzw. "Multiple Pulses in the Air"- (MPIA) -Situation bezeichnet. Ein jeweils eindeutiger Zuordnungsbereich zwischen Sende- und Empfangsimpulsen wird als MTA-Zone bezeichnet. Die Größe D einer MTA-Zone ergibt sich dabei aus der Impulswiederholrate (Pulse Repetition Rate, PRR) und der Lichtgeschwindigkeit c zu $D = c/(2 \cdot PRR)$ .

In einer bevorzugten Variante des erfindungsgemäßen Verfahrens wird nun die Impulswiederholrate der aktuellen Abtastzeile in Abhängigkeit von zumindest einem Entfernungsmesswert zumindest einer der letzten Abtastzeilen auch so variiert, dass Empfangsimpulse nicht mit ausgesandten Sendeimpulsen im Laserscanner - jedenfalls nicht innerhalb von die Blind Ranges abbildenden Toleranzzeitfenstern - zusammentreffen. Wenn also die Entfernungsmesswerte einer vorhergehenden Abtastzeile in die Nähe einer Blind Range gelangen, werden die Impulswiederholrate und damit die Sendezeitpunkte der Laserimpulse der aktuellen Abtastzeile so versetzt, dass sie nicht mit den voraussichtlich zu erwartenden Empfangsimpulsen von vorigen Sendeimpulsen der aktuellen Abtastzeile zusammentreffen.

Insbesondere bei Verwendung von jeweils in derselben Weise teilabschnitt-diskretisierten Abtastzeilen wird das Impulswiederholraten-Profil der aktuellen Abtastzeile an das Entfernungsmesswert-Profil einer (oder mehrerer) vorhergehender Abtastzeilen so angepasst, dass das Zusammentreffen von Sendeimpulsen mit einlangenden Empfangsimpulsen vermieden wird. Dazu wird bevorzugt die genannte Abhängigkeit der Impulswiederholrate derart gewählt, dass der Sendezeitpunkt eines Laserimpulses im betrachteten Teilabschnitt der aktuellen Abtastzeile einen zeitlichen Mindestabstand zum Empfangszeitpunkt eines berechneten ("fiktiven") Impulses hat, der zum Sendezeitpunkt eines vorhergehenden Laserimpulses der aktuellen Abtastzeile ausgesandt und von einem Abtastpunkt desselben Teilabschnitts einer vorhergehenden Abtastzeile reflektiert würde. Das historische Entfernungsmesswert-Profil einer (oder mehrerer) letzter Abtastzeilen wird so zur Prädiktion - auf Basis der Annahme einer sich nur allmählich ändernden Topographie der Umgebung - der voraussichtlichen Empfangsimpulse der aktuellen Abtastzeile und zur entsprechenden Veränderung des Impulswiederholraten-Profils der Sendeimpulse der aktuellen Abtastzeile verwendet, sodass diese Sendeimpulse nicht mit voraussichtlichen Empfangsimpulsen zusammentreffen.

Die Impulswiederholrate in einem Teilabschnitt der aktuellen Abtastzeile kann auch von mehreren Entfernungsmesswerten einer oder mehrerer vorhergehender Abtastzeilen abhängig sein, u.zw. insbesondere wenn jede Abtastzeile in dieselbe Anzahl von Teilabschnitten unterteilt ist. In einer ersten bevorzugten Variante hängt dazu die Impulswiederholrate im betrachteten Teilabschnitt der aktuellen Abtastzeile von einem Mittelwert von Entfernungsmesswerten desselben Teilabschnitts zumindest einer vorhergehenden Abtastzeile ab. Die Mittelwertbildung kann dabei sowohl über mehrere Entfernungsmesswerte einer vorhergehenden Abtastzeile als auch über Entfernungsmesswerte mehrerer vorheriger Abtastzeilen erfolgen, oder beides. Durch eine solche Mittelwertbildung können Messwertausreißer beseitigt und eine Glättung erzielt werden.

In einer zweiten bevorzugten Variante hängt dazu die Impulswiederholrate im betrachteten Teilabschnitt der aktuellen Abtastzeile von einem Extrapolationswert von Entfernungsmesswerten desselben Teilabschnitts zumindest zweier vorhergehender Abtastzeilen ab. Dadurch kann beispielsweise ein in Bewegungsrichtung des Scanfächers ansteigendes oder abfallendes Terrain erkannt und für das Impulswiederholraten-Profil der aktuellen Abtastzeile herangezogen werden.

Bei Laserscannern mit rotierenden Spiegelpyramiden oder Polygonspiegelrädern zur Ablenkung des Messstrahls über den Scanfächer ist die Winkelgeschwindigkeit des Messstrahls während einer Abtastzeile im Wesentlichen konstant und kann daher als Konstante in die Abhängigkeitsfunktion des Impulswiederholraten-Profils von dem/den vorhergehenden Entfernungsmesswert-Profil(en) eingehen. Im Falle von Laserscannern mit schwingenden Ablenkspiegeln bewegt sich der Messstrahl jedoch mit variabler Winkelgeschwindigkeit über die Abtastzeile. Die Impulswiederholrate in einem Teilabschnitt der aktuellen Abtastzeile hängt dann bevorzugt auch von der Winkelgeschwindigkeit, mit welcher der Messstrahl in diesem Teilabschnitt über die Umgebung geführt ist, ab, um eine möglichst gleichmäßige Verteilung der Abtastpunkte über die Umgebung zu erzielen.

In einem zweiten Aspekt schafft die Erfindung auch ein Verfahren zum Vermessen einer Umgebung gemäß Anspruch 8. Hinsichtlich der Vorteile und bevorzugter Ausgestaltungen des erfindungsgemäßen Verfahrens wird auf die obigen Ausführungen zum erfindungemäßen Laserscanner verwiesen.

Die Erfindung wird nachstehend anhand von in den beigeschlossenen Zeichnungen dargestellten Ausführungsbeispielen näher erläutert. In den Zeichnungen zeigt:

Fig. 1 den Laserscanner der Erfindung beim Vermessen einer Umgebung nach dem erfindungsgemäßen Verfahren in einer schematischen Perspektivansicht;
Fig. 2 beispielhafte Zeitdiagramme von Sende- und Empfangslaserimpulsen des Laserscanners von Fig. 1;
Fig. 3 einen der Abtastfächer des Laserscanner von Fig. 1 in Fortbewegungsrichtung des Laserscanners gesehen;
Fig. 4 ein Entfernungsmesswert-Profil einer Abtastzeile des Laserscanners von Fig. 1;
Fig. 5 Abtastpunkte eines Laserscanners nach dem Stand der Technik in einer Draufsicht auf die Umgebung;
Fig. 6 Abtastpunkte einer Abtastzeile einer ersten Ausführungsform des Laserscanners von Fig. 1 in einer schematischen Perspektivansicht der Umgebung;
Fig. 7 ein Impulswiederholraten-Profil einer Abtastzeile des Laserscanners von Fig. 1;
Fig. 8 einen Ausschnitt von Fig. 6 bzw. Fig. 9 während des Aussendens von Sendeimpulsen in einer aktuellen Abtastzeile in einer schematischen Perspektivansicht;
Fig. 9 Abtastpunkte einer zweiten Ausführungsform des Laserscanners von Fig. 1 in einer Draufsicht auf die Umgebung;
Fig. 10 das Extrapolieren von Entfernungsmesswerten aus mehreren vorhergehenden Abtastzeilen im Zuge des erfindungsgemäßen Verfahrens; und
Fig. 11 beispielhafte Zeitdiagramme von Sende- und Empfangsimpulsen des Laserscanners von Fig. 1 zur Vermeidung von Blind Ranges.

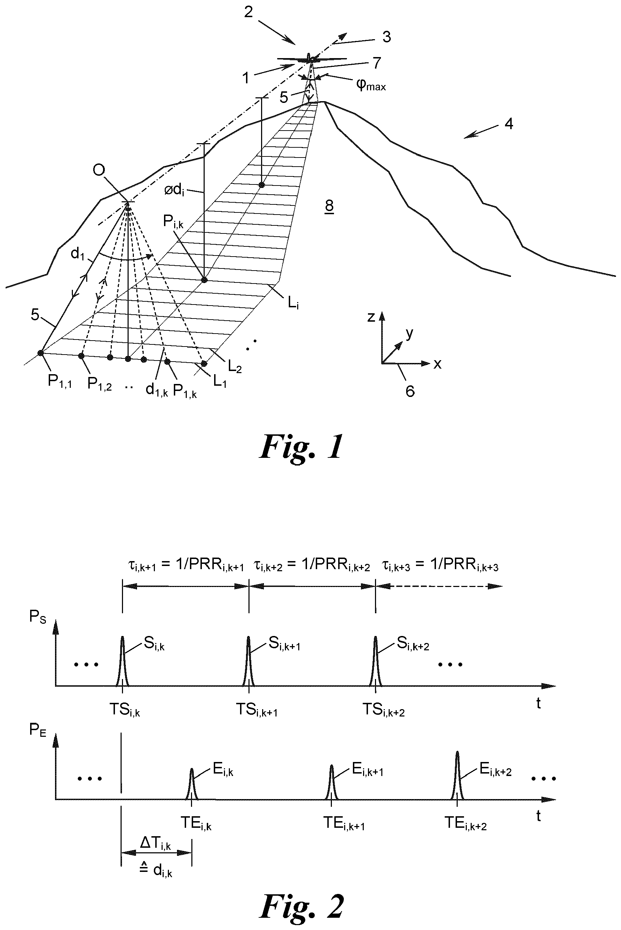

Fig. 1 zeigt einen Laserscanner 1, der von einem Land-, Wasser- oder Luftfahrzeug 2, hier einem Flugzeug, in einer Fortbewegungsrichtung 3 über eine Umgebung 4 bewegt wird, um diese zu vermessen. Die Umgebung 4 ist beispielsweise ein Terrain wie der Erd- oder Meeresboden, ein Fassadenzug, eine Straßenschlucht, die Innenoberfläche eines Tunnels, Bergwerks oder einer Tagbaugrube, od.dgl. Der Laserscanner 1 tastet die Umgebung 4 mit einem gepulsten Lasermessstrahl 5 ab, der in aufeinanderfolgenden Abtastzeilen $L_i$ (i = 1, 2, ...) zeilenweise über die Umgebung 4 geführt wird.

Aus Messungen der Laufzeiten $\Delta T_{i,k}$ (Fig. 2) der im Messstrahl 5 enthaltenen, jeweils vom Laserscanner 1 zu einem Sendezeitpunkt $TS_{i,k}$ als Sendeimpulse $S_{i,k}$ (k = 1, 2, ...) ausgesandten und nach jeweiliger Reflexion an einem Abtastpunkt $P_{i,k}$ der Umgebung 4 im Laserscanner 1 als Empfangsimpulse $E_{i,k}$ zu jeweiligen Empfangszeitpunkten $TE_{i,k}$

zurückerhaltenen Laserimpulse können die jeweiligen Zielentfernungen $d_{i,k}$ zu den Abtastpunkten $P_{i,k}$ gemäß der bekannten Beziehung $d_{i,k} = \Delta T_{i,k} \cdot c/2$, mit Lichtgeschwindigkeit c, bestimmt werden. Und in Kenntnis der jeweiligen Position und Lage O des Laserscanners 1 beim Aussenden eines Laserimpulses $S_{i,k}$ sowie der jeweiligen Richtung des diesen Laserimpuls $S_{i,k}$ enthaltenden Messstrahls 5 in einem Koordinatensystem 6 kann dann aus der jeweiligen Zielentfernung $d_{i,k}$ die Position des jeweiligen Abtastpunkts $P_{i,k}$ im Koordinatensystem 6 ermittelt werden. Die Menge $\{P_{i,k}\}$ aller Abtastpunkte $P_{i,k}$ im Koordinatensystem 6 bildet ein 3D-Punktemodell (eine "Abtastpunktwolke") der Umgebung 4, welches das Vermessungsergebnis darstellt.

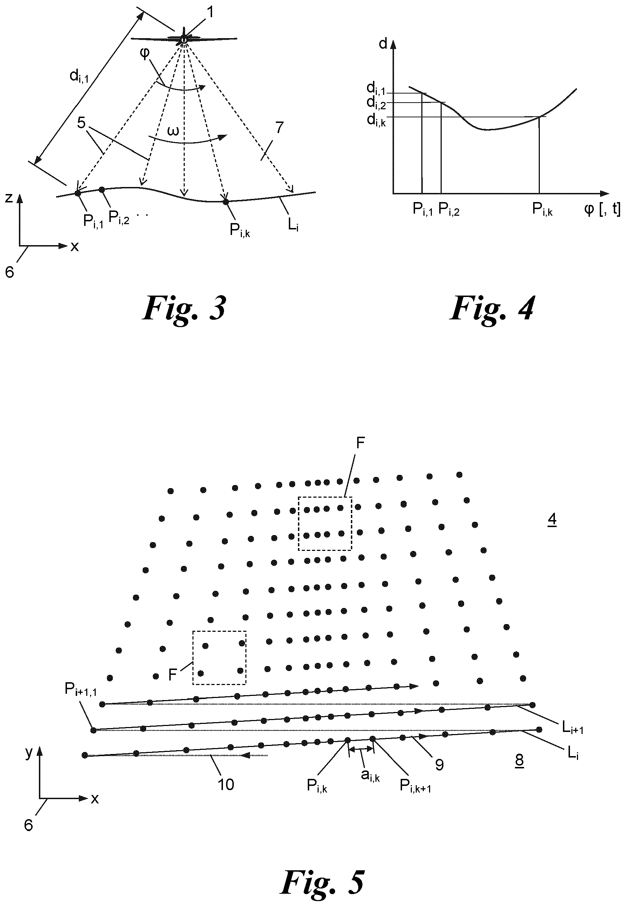

Gemäß Fig. 3 wird der Messstrahl 5 zur Erzeugung jeder Abtastzeile $L_i$ über einen Abtastwinkel $\varphi$ mit einer Winkelgeschwindigkeit $\omega = d\varphi/dt$ verschwenkt und bildet solcherart einen Scanfächer 7 mit dem Divergenzwinkel $\varphi_{max}$. Die Schnittlinie des Scanfächers 7 mit der Umgebung 4 bildet die Abtastzeile $L_i$.

Fig. 4 zeigt die Entfernungsmesswerte $d_{i,k}$ der Abtastpunkte $P_{i,k}$ der Abtastpunkte $P_{i,k}$ der Abtastzeile $L_i$ von Fig. 3 über dem Schwenkwinkel $\varphi$. Bei einer konstanten Winkelgeschwindigkeit $\omega$ entspricht die Kurve von Fig. 4 auch den Entfernungsmesswerten $d_{i,k}$ der Abtastpunkte $P_{i,k}$ der Abtastzeile $L_i$ über der Zeit t.

Fig. 5 zeigt die vom Laserscanner 1 in einem ansteigenden Bereich 8 der beispielhaften Umgebung 4 von Fig. 1 erzeugten Abtastpunkte $P_{i,k}$ in einer Draufsicht in Lotrichtung (z-Achse), und zwar wenn der Laserscanner 1 nach dem Stand der Technik ausgebildet wäre. Wie ersichtlich variieren aufgrund des Divergenzwinkels $\varphi_{max}$ des Abtastfächers 7 die gegenseitigen Abstände a der Abtastpunkte $P_{i,k}$ einer Abtastzeile $L_i$ im Verlauf der Abtastzeile $L_i$. Fig. 5 zeigt speziell den Fall eines Laserscanners 1 mit einer rotierenden Spiegelpyramide, welche den Messstrahl 5 mit einer konstanten Winkelgeschwindigkeit $\omega$ über jede Abtastzeile $L_i$ in derselben Richtung 9 schwenkt und dann schlagartig zurückspringen lässt, siehe Rücksprunglinien 10, sowie den Fall einer gleichförmigen Fortbewegung des Laserscanners 1 in der Fortbewegungsrichtung 3.

Wie in den Fig. 3 und 5 gezeigt, führt die Scanfächerdivergenz $\varphi_{max}$ zu ungleichmäßigen Abständen $a_{i,k}$ der Abtastpunkte $P_{i,k}$ über eine Abtastzeile $L_i$ (hier etwa in x-Richtung). Gleichzeitig nehmen die Längen $lg_i$ der Abtastzeilen $L_i$ durch den Terrainanstieg (siehe durchschnittliche Abtastzeilenentfernung $Ød_i$ in Fig. 1) im Bereich 8 aufgrund der Scanfächerdivergenz $\varphi_{max}$ in y-Richtung ab. Im Ergebnis variiert die lokale Dichte der Abtastpunkte $P_{i,k}$, d.h. die Anzahl von Abtastpunkten $P_{i,k}$ pro vorgegebener Flächeneinheit F, in der Draufsicht von Fig. 5 stark über die Umgebung 4. Um dies zu kompensieren, werden die nun im Folgenden beschriebenen Maßnahmen getroffen.

Wie in Fig. 2 gezeigt, entspricht die Impulswiederholrate PRR, mit welcher die Laserimpulse vom Laserscanner 1 als Sendeimpulse $S_{i,k}$ ausgesandt werden, dem Kehrwert des Impulsabstandes $\tau$ zweier aufeinanderfolgender Sendeimpulse, d.h. PRR = $1/\tau$ = $1/(TS_{i,k+1} - TS_{i,k})$. In dem in Fig. 2 gezeigten Beispiel variieren der Impulsabstand $\tau$ bzw. die Impulswiederholrate PRR nach jedem Sendeimpuls $S_{i,k}$, siehe $\tau_{i,1}$, $\tau_{i,2}$, ... bzw. $PRR_{i,1}$, $PRR_{i,2}$, ....

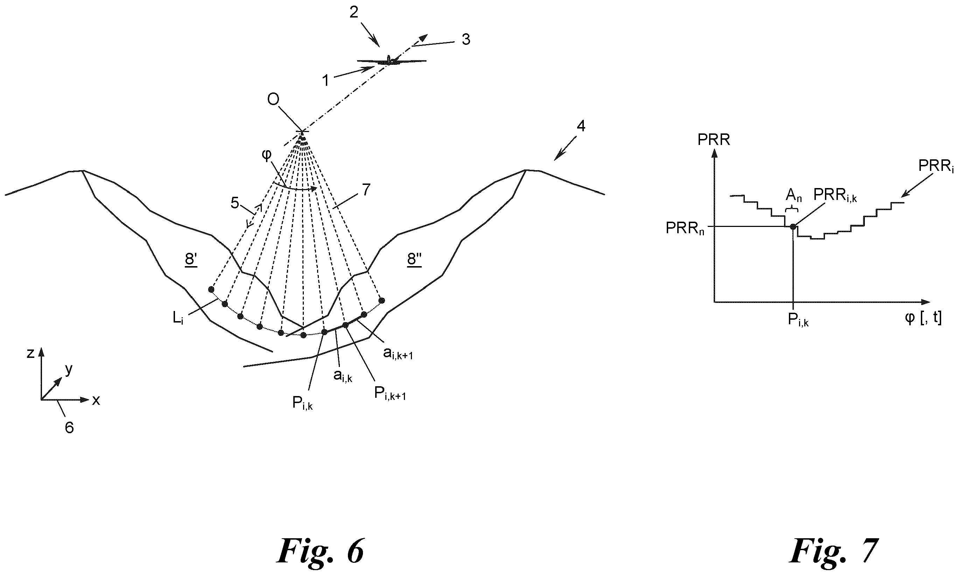

Unter Bezugnahme auf die Fig. 6 bis 8 wird nun die Impulswiederholrate PRR im Verlauf jeder Abtastzeile $L_i$ so variiert, dass die gegenseitigen Abstände $a_{i,k}$ zweier aufeinanderfolgender Abtastpunkte $P_{i,k}$, $P_{i,k+1}$ soweit wie möglich konstant sind. Unter den Abständen $a_{i,k}$ werden dabei die tatsächlichen, im 3D-Koordinatensystem 6 auftretenden Abstände zwischen zwei Abtastpunkten $P_{i,k}$, $P_{i,k+1}$ verstanden, d.h. der Absolutbetrag des Vektors von einem Abtastpunkt $P_{i,k}$ im Koordinatensystem 6 zum jeweils benachbarten Abtastpunkt $P_{i,k+1}$ im Koordinatensystem 6. Durch das weitestgehende Konstanthalten der Abstände $a_{i,k}$ in jeder Abtastzeile $L_i$ wird erreicht, dass z.B. auch quer zur Fortbewegungsrichtung 3, d.h. in Fächerrichtung 7 ansteigende Bereiche 8', 8" der Umgebung 4 mit einer über ihre Oberfläche gleichmäßigen Auflösung gescannt werden. Das 3D-Punktemodell $\{P_{i,k}\}$ bildet damit die Umgebung 4 in einem gleichmäßig aufgelösten Netzgittermodell ab, dessen Gitterknoten die Abtastpunkte $P_{i,k}$ und dessen Gitterkanten die Abstände $a_{i,k}$ bilden.

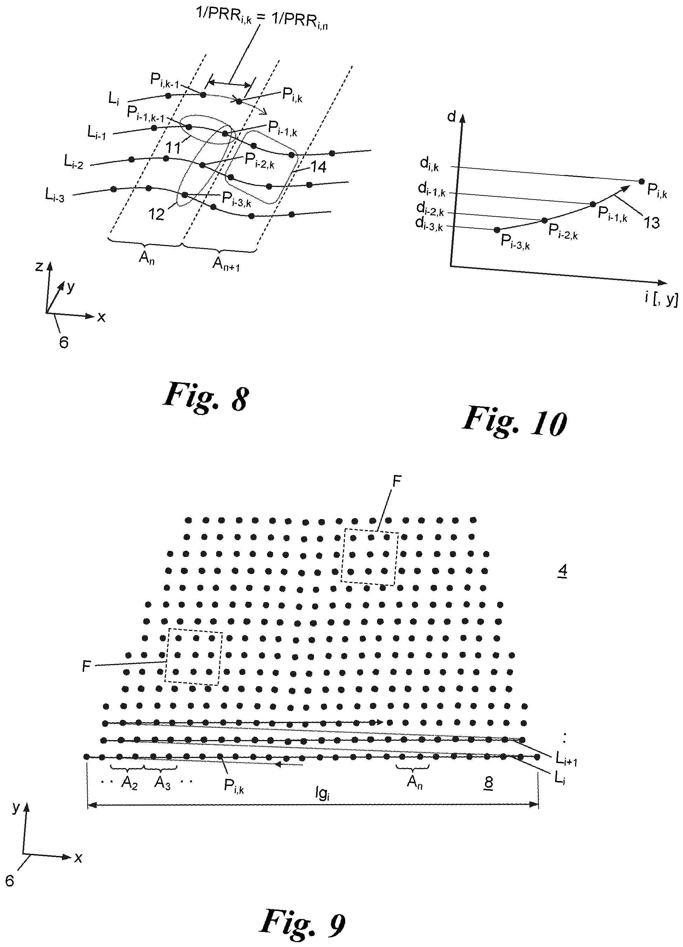

Zu diesem Zweck wird, wie in Fig. 7 und 8 gezeigt, jede Abtastzeile $L_i$ in aufeinanderfolgende Teilabschnitte $A_n$ (n = 1, 2, ...) unterteilt, und für jeden Teilabschnitt $A_n$ wird eine derart angepasste Impulswiederholrate $PRR_n$ für die darin enthaltenen Sendeimpulse $S_{i,k}$ vorgegeben, dass sich das gewünschte Ergebnis von Fig. 6 einstellt.

Die Anzahl an Teilabschnitten $A_n$ pro Abtastzeile $L_i$ kann eins, zwei, drei oder mehr bis hin zu der Anzahl aller Abtastpunkte $P_{i,k}$ der betrachteten Abtastzeile $L_i$ betragen. Je mehr Teilabschnitte $A_n$ pro Abtastzeile $L_i$ verwendet werden, desto feiner kann die Impulswiederholrate PRR über die Abtastzeile $L_i$ variieren und desto gleichmäßiger können die Abstände $a_{i,k}$ über die Abtastzeile $L_i$ bzw. die lokale Dichte der Abtastpunkte $P_{i,k}$ über die Umgebung 10 werden. Demgemäß kann ein Teilabschnitt $A_n$ einen, zwei oder mehr Abtastpunkte $P_{i,k}$ einer Abtastzeile $L_i$ enthalten. Auch brauchen die einzelnen Teilabschnitte $A_n$ einer Abtastzeile $L_i$ nicht notwendigerweise gleich lang zu sein.

Die Teilabschnitte $A_n$ einer Abtastzeile $L_i$ können auf verschiedenste Art festgelegt werden. In einer ersten Variante wird der Divergenzwinkel $\varphi_{max}$ des Scanfächers 7 in gleiche Teilwinkel $\varphi_n$ unterteilt und die Abtastpunke $P_{i,k}$ der im jeweiligen Teilwinkel $\varphi_n$ ausgesandten Sendeimpulse $S_{i,k}$ definieren jeweils einen Teilabschnitt $A_n$. In einer zweiten Variante wird die Zeit T, die der Messstrahl 5 für das Überstreichen des Scanfächers 7 benötigt, in gleiche Zeitabschnitte $T_n$ unterteilt und die Abtastpunkte $P_{i,k}$ der im jeweiligen Zeitabschnitt $T_n$ ausgesandten Sendeimpulse $S_{i,k}$ definieren einen Teilabschnitt $A_n$. In einer dritten Variante wird die Anzahl Z von Abtastpunkten $P_{i,k}$ einer Abtastzeile $L_i$ in gleiche Teilanzahlen $Z_n$ unterteilt und jeweils $Z_n$ aufeinanderfolgende Abtastpunkte $P_{i,k}$ definieren einen Teilabschnitt $A_n$. Für eine möglichst feinfühlige Variation der Impulswiederholraten über eine Abtastzeile $L_i$ enthält beispielsweise jeder Teil-

abschnitt $A_n$ nur einen einzigen Abtastpunkt $P_{i,k}$, so dass die Impulswiederholrate PRR von Sendeimpuls zu Sendeimpuls $S_{i,k}$ variiert. In einer vierten Variante nimmt jeder Teilabschnitt $A_n$ die gleiche Länge in der Abtastzeile $L_i$ ein. Dies kann für jede historische Abtastzeile $L_{i-1}$, $L_{i-2}$, ..., einfach gemessen werden, für die aktuelle Abtastzeile $L_i$ stellt dies hingegen eine Prädiktion auf Basis der Annahme dar, dass sie etwa so wie die vorhergehende(n) verläuft.

Fig. 9 zeigt eine alternative oder zusätzliche Zielfunktion für das Variieren der Impulswiederholrate $PRR_{i,k}$ über eine Abtastzeile $L_i$ in Abhängigkeit eines oder mehrerer Entfernungsmesswerte $d_{i-1,k}$ usw. einer mehrerer vorhergehender Abtastzeilen $L_{i-1}$ usw. In dem Beispiel von Fig. 9 wird - alternativ oder zusätzlich zu dem Konstanthalten der Abstände $a_{i,k}$ nach Fig. 6 - die Impulswiederholrate PRR im Verlauf jeder Abtastzeile $L_i$ so variiert, dass die lokale Dichte der Abtastpunkte $P_{i,k}$ in der Draufsicht der Umgebung 4 in Lotrichtung (hier: z-Achse) über zumindest mehrere aufeinanderfolgende Abtastzeilen $L_i$ - wenn möglich über die gesamte Umgebung 4 - im Wesentlichen konstant ist. Fig. 9 zeigt beispielhaft ein solches Ergebnis im ansteigenden Bereich 8 der Umgebung 4 von Fig. 1. Wie ersichtlich ist die lokale Dichte der Abtastpunkte $P_{i,k}$, d.h. deren Anzahl pro vorgewählter Flächeneinheit F, hier überall etwa neun Abtastpunkte $P_{i,k}$ pro Flächeneinheit F.

In den konkreten Beispielen der Fig. 6 bis 9 sind die Teilabschnitte $A_n$ so definiert, dass jeder Teilabschnitt $A_n$ zwei Sendeimpulse $S_{i,k}$ und somit zwei Abtastpunkte $P_{i,k}$ enthält. Fig. 8 zeigt einen Ausschnitt von Fig. 6 (oder auch Fig. 9) während der Erstellung der aktuellen Abtastzeile $L_i$, und zwar im Teilabschnitt $A_n$, wenn im Anschluss an einen Sendeimpuls $S_{i,k-1}$ (für den Abtastpunkt $P_{i,k-1}$) der Sendeimpuls $S_{i,k}$ (für den Abtastpunkt $P_{i,k}$) mit der Impulswiederholrate $PRR_{i,k} = 1/\tau_{i,k}$ ausgesandt werden soll. Für diese Impulswiederholrate $PRR_{i,k}$ wird die für den Teilabschnitt $A_n$ wie nachfolgend beschrieben ermittelte Impulswiederholrate $PRR_n$ verwendet.

Da im gezeigten Beispiel der Teilabschnitt $A_n$ zwei Abtastpunkte $P_{i,k-1}$, $P_{i,k}$ enthält, wird die Impulswiederholrate $PRR_n$ des Teilabschnitts $A_n$ zweimal verwendet, u.zw. entweder zwischen den Abtastpunkten $P_{i,k-2}$ (vom vorigen Teilabschnitt $A_{n-1}$) und $P_{i,k-1}$ sowie zwischen $P_{i,k-1}$ und $P_{i,k}$, oder aber zwischen den Abtastpunkten $P_{i,k-1}$ und $P_{i,k}$ sowie zwischen $P_{i,k}$ und $P_{i,k+1}$ (vom nächsten Teilabschnitt $A_{n+1}$); beide Alternativen sind gleichwertig und letztlich nur eine Frage der Betrachtungsweise, ob die in Fig. 8 strichliert eingezeichneten Grenzen zwischen den Teilabschnitten $A_n$ an oder zwischen den Abtastpunkten $P_{i,k}$ gezogen werden.

Unter Bezugnahme auf Fig. 8 wird nun die in einem Teilabschnitt $A_n$ einer aktuellen Abtastzeile $L_i$ verwendete Impulswiederholrate $PRR_n$ abhängig von zumindest einem Entfernungsmesswert $d_{i-1,k}$ eines Abtastpunkts $P_{i-1,k}$ zumindest einer vorhergehenden Abtastzeile (hier: der vorhergehenden Abtastzeile $L_{i-1}$) festgelegt. Insbesondere werden - sofern alle Abtastzeilen $L_i$ etwa dieselbe Anzahl von Teilabschnitten $A_n$ haben - ein oder mehrere Entfernungsmesswerte von Abtastpunkten aus demselben Teilabschnitt $A_n$ ein oder mehrerer unmittelbar vorhergehender Abtastzeilen zur Bestimmung der Impulswiederholrate $PRR_n$ im Teilabschnitt $A_n$ der jeweils aktuellen Abtastzeile $L_i$ herangezogen, wie anhand von vier verschiedenen, in Fig. 8 dargestellten Ausführungsbeispielen erläutert wird.

In einem ersten, in Fig. 8 gezeigten Beispiel hängt die Impulswiederholrate $PRR_n$ im Teilabschnitt $A_n$ der aktuellen Abtastzeile $L_i$ vom Entfernungsmesswert $d_{i-1,k}$ nur eines Abtastpunkts $P_{i-1,k}$ desselben Teilabschnitts $A_n$ der unmittelbar vorhergehenden Abtastzeile $L_{i-1}$ ab.

In einem zweiten, in Fig. 8 gezeigten Beispiel hängt die Impulswiederholrate $PRR_n$ im Teilabschnitt $A_n$ der aktuellen Abtastzeile $L_i$ von den Entfernungsmesswerten $d_{i-1,k-1}$, $d_{i-1,k}$, ... zweier oder mehrerer Abtastpunkte $P_{i-1,k-1}$, $P_{i-1,k}$, ... desselben Teilabschnitts $A_n$ der unmittelbar vorhergehenden Abtastzeile $L_{i-1}$ ab, beispielsweise von einem Mittelwert dieser Entfernungsmesswerte. Die für die Mittelwertbildung herangezogenen Entfernungsmesswerte bzw. Abtastpunkte sind in Fig. 8 durch die punktierte Linie 11 hervorgehoben.

In einem dritten, in Fig. 8 gezeigten Beispiel hängt die Impulswiederholrate $PRR_n$ im Teilabschnitt $A_n$ der aktuellen Abtastzeile $L_i$ von den Entfernungsmesswerten $d_{i-1,k}$, $d_{i-2,k}$, ... zweier oder mehrerer Abtastpunkte $P_{i-1,k}$, $P_{i-2,k}$, ... desselben Teilabschnitts $A_n$ zweier oder mehrerer unmittelbar vorhergehender Abtastzeilen $L_{i-1}$, $L_{i-2}$, ... ab, wie durch die punktierte Linie 12 veranschaulicht. Bei dieser Abhängigkeit kann es sich wieder um eine Mittelwertbildung handeln oder insbesondere - wie in Fig. 10 gezeigt - um eine Extrapolation.

Fig. 10 zeigt diese Extrapolation von Entfernungsmesswerten über die Gruppe 12. Die Entfernungsmesswerte $d_{i-3,k}$, $d_{i-2,k}$, $d_{i-1,k}$ der Gruppe 12 werden zu einem geschätzten Entfernungsmesswert $d_{i,k}$ extrapoliert, beispielsweise durch lineare Extrapolation oder Curve Fitting einer entsprechend gewählten Kurve 13, z.B. eines Polynoms zweiter, dritter oder höherer Ordnung. Für das Curve Fitting können alle Arten von Abweichungsnormen als Best-Fit-Kriterium herangezogen werden, beispielsweise L1-Normen, L2- oder andere Least-Squares-Normen usw.

Auch eine Kombination aus Mittelwertbildung (Gruppe 11) und Extrapolation (Gruppe 12) kann verwendet werden, siehe die punktiert eingezeichnete Gruppe 14. Dabei können sowohl Mittelwerte verschiedener Gruppen 11 extrapoliert als auch die verschiedene Extrapolationswerte (Gruppen 12) gemittelt werden.

Die - gegebenenfalls gemittelten und/oder extrapolierten - Entfernungsmesswerte $d_{i,k}$ aus allen Teilabschnitten $A_n$ einer (oder mehrerer) vorhergehender Abtastzeile (n) $L_{i-1}$, $L_{i-2}$, ... stellen somit ein in der Ortsauflösung der Teilabschnitte $A_n$ diskretisiertes Entfernungsmesswert-Profil $\{d_n\}$ (Fig. 4) dieser historischen Abtastzeile(n) dar. In gleicher Weise stellen die für alle Teilabschnitte $A_n$ der aktuellen Abtastzeile $L_i$ zu berechnenden Impulswiederholraten $PRR_n$ ein in der Ortsauflösung der Teilabschnitte $A_n$ diskretisiertes Impulswiederholraten-Profil $\{PRR_n\}$ (Fig. 7) dar, welches im Verlauf der aktuellen Abtastzeile $L_i$ während der Bewegung des Messstrahls 5 über den Scanfächer 7 bei der Aussendung der Sendeimpulse $S_{i,k}$ angewandt wird.

Bei einer konstanten Winkelgeschwindigkeit $\omega$ über den Scanfächer 7 ähnelt die Form des Impulswiederholraten-Profils $\{PRR_n\}$ einer Abtastzeile $L_i$ in Abhängigkeit des Ablenkwinkels $\varphi$ bzw. der verstrichenen Zeit t (Fig. 7) der in Fig. 4 gezeigten Form des Entfernungsmesswert-Profils $\{d_n\}$ der Abtastzeile $L_i$: An den Rändern des Scanfächers 7 wird sich eine höhere Impulswiederholrate $PRR_n$ ergeben als in der Mitte, um die Abtastpunkte $P_{i,k}$ gleichmäßig über eine Abtastzeile $L_i$ zu verteilen. Gleichzeitig wird die Impulswiederholrate $PRR_n$ für größere Abtastzeilenentfernungen $\emptyset d_i$ und damit Abtastzeilenlängen $lg_i$ höher sein, um mehr Abtastpunkte $P_{i,k}$ pro Abtastzeile $L_i$ zu erzeugen, und niedriger sein bei kleineren Abtastzeilenentfernungen $\emptyset d_i$ und kleineren Abtastzeilenlängen $lg_i$, um die Abtastpunkte $P_{i,k}$ unabhängig von der Entfernung gleichmäßig über die Umgebung 4 zu verteilen.

In einer ersten Ausführungsform kann - in einer Näherung für kleine Winkeländerungen $\Delta\varphi$ des Messstrahls 5 von Abtastpunkt $P_{i,k}$ zu Abtastpunkt $P_{i,k+1}$ - die folgende Abhängigkeit des Impulswiederholraten-Profils $\{PRR_n\}_i = \{PRR_{i,1}, PRR_{i,2}, ..., PRR_{i,n}, ...\}$ der aktuellen Abtastzeile $L_i$ (siehe Fig. 7) von dem Entfernungsmesswert-Profil $\{d_n\}_{i-1} = \{d_{i-1,1}, d_{i-1,2}, ..., d_{i-1,n}, ...\}$ der vorhergehenden Abtastzeile $L_{i-1}$ (siehe Fig. 4) verwendet werden:

$$PRR_{i,n} = \frac{\omega_{i,n}}{a_{i,k}}\sqrt{d_{i-1,n}^2 + \left(\frac{\partial d_{i-1,n}}{\partial \varphi}\right)^2} \qquad (1)$$

mit

$\omega_{i,n}$     Winkelgeschwindigkeit des Messstrahls 5 im Teilabschnitt $A_n$ der Abtastzeile $L_i$,

$a_{i,k}$     gewünschter gleichmäßiger Abstand der Abtastpunkte $P_{i,k}$ im Teilabschnitt $A_n$ der Abtastzeile $L_i$ und

$\dfrac{\partial}{\partial \varphi}$     erste Ableitung nach dem Winkel $\varphi$.

Wenn $\dfrac{\partial d_{i-1,n}}{\partial \varphi}$ sehr klein ist, d.h. die zu vermessende Umgebung 4 sich nur schwach im Verlauf einer Abtastzeile $L_i$ ändert, reduziert sich Gleichung (1) zu

$$PRR_{i,n} = \frac{\omega_{i,n}}{a_{i,k}}d_{i-1,n} \qquad (2)$$

In einer zweiten Ausführungsform kann die Abhängigkeit des Impulswiederholraten-Profils $\{PRR_n\}_i$ der aktuellen Abtastzeile $L_i$ von dem Entfernungsmesswert-Profil $\{d_n\}_{i-1}$ der vorhergehenden Abtastzeile $L_{i-1}$ auch als Frequenzmodulation formuliert werden zu:

$$PRR_{i,n} = PRR_0 + K \cdot \sum_{n=1}^{N}\left(d_{i-1,n} - \overline{d}_{i-1}\right) \qquad (3)$$

$$\overline{d}_{i-1} = \frac{1}{N} \cdot \sum_{n=1}^{N} d_{i-1,n} \qquad (4)$$

mit

$PRR_0$     ein entsprechend gewählter Basiswert der Impulswiederholrate,

N     Anzahl der Teilabschnitte $A_n$ sowohl der aktuellen Abtastzeile $L_i$ als auch der vorhergehenden Abtastzeile $L_{i-1}$ und

K     ein entsprechend gewählter Skalierungsfaktor.

Wenn sich der Messstrahl 5 mit einer veränderlichen Winkelgeschwindigkeit über die Abtastzeilen $L_i$ bewegt, kann Gleichung (3) optional skaliert werden zu:

$$PRR_{i,n} = \left[ PRR_0 + K \cdot \sum_{n=1}^{N} \left( d_{i-1,n} - \overline{d}_{i-1} \right) \right] \cdot \omega_{i,n} \qquad (5)$$

Wie oben anhand der Fig. 8 und 10 erläutert, können anstelle der in den Gleichungen (1) bis (5) beispielhaft verwendeten Entfernungsmesswerte $d_{i-1,n}$ auch wieder Mittelwerte (siehe Gruppen 11, 12, 14) oder Extrapolationen (siehe Kurve 13) von Entfernungsmesswerten einer oder mehrerer vorhergehender Abtastzeilen $L_{i-1}$, $L_{i-2}$, ... eingesetzt werden.

Auch andere Abhängigkeiten können entsprechend der Bewegung des Messstrahls 5 über den Scanfächer 7 und der Bewegung des Scanfächers 7 über die Umgebung 4 gewählt werden, um das in Fig. 6 gezeigte Ergebnis möglichst gleichmäßiger Abstände $a_{i,k}$ der Abtastpunkte $P_{i,k}$ in einer Abtastzeile $L_i$ und/oder bis in Fig. 9 gezeigte Ergebnis einer möglichst gleichmäßigen lokalen Dichte der Abtastpunkte $P_{i,k}$ über die Umgebung 4 zu erzielen.

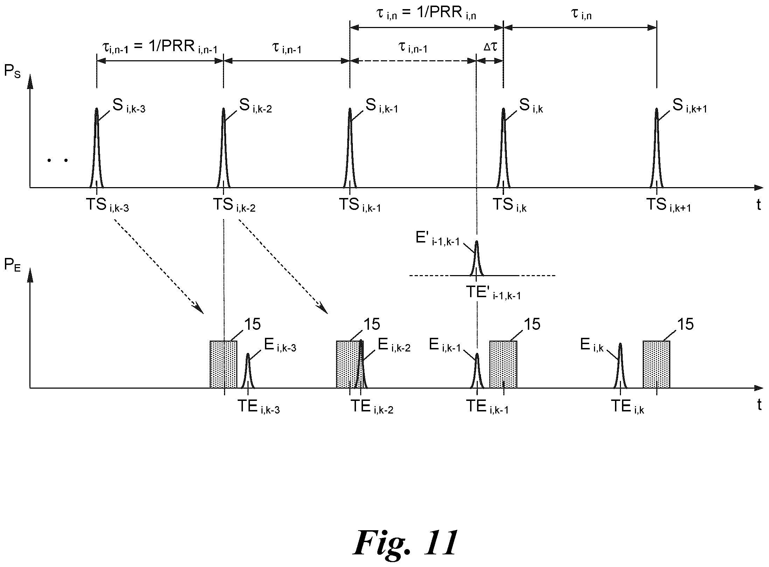

Die Variation der Impulswiederholrate $PRR_n$ über die aktuelle Abtastzeile $L_i$ in Abhängigkeit des Entfernungs-messwert-Profils $\{d_n\}$ einer (oder mehrerer) vorhergehender Abtastzeilen $L_{i-1}$, $L_{i-2}$, ... kann auch zur Vermeidung der erläuterten Blind Ranges an den MTA-Zonengrenzen des Laserscanners 1 verwendet werden, wie nun anhand von Fig. 11 beschrieben wird.

Fig. 11 zeigt - in derselben Art und Weise wie Fig. 2 - die Sende- und Empfangsimpulse $S_{i,k}$, $E_{i,k}$ des Laserscanners 1, jedoch nun zuanfangs für die Situation, wenn die von den ersten beiden dargestellten Sendeimpulsen $S_{i,k-3}$ und $S_{i,k-2}$ getroffenen Abtastpunkte $P_{i,k-3}$ und $P_{i,k-2}$ sich in der zweiten MTA-Zone befinden: In dieser MTA-Zone wird z.B. der auf den Sendeimpuls $S_{i,k-3}$ folgende Sendeimpuls $S_{i,k-2}$ bereits ausgesandt, noch bevor der zum Sendeimpuls $S_{i,k-3}$ gehörende Empfangsimpuls $E_{i,k-3}$ im Laserscanner 1 zurückempfangen wurde. Die Größe D einer MTA-Zone beträgt wie eingangs erläutert c/(2·PRR), und die Abtastpunkte $P_{i,k-3}$ und $P_{i,k-2}$ liegen somit in einem Bereich von D bis 2D vom Laserscanner 1 entfernt (MTA-Zone 2).

Wie eingangs beschrieben ist der Laserscanner 1 jeweils zum Zeitpunkt $TS_{i,k}$ des Aussendens eines Sende-Laserimpulses $S_{i,k}$ über ein Zeitfenster 15 "blind" für den Empfang eines Empfangsimpulses $E_{i,k}$, was örtlich betrachtet eine Blind Range rund um jede der MTA-Zonengrenzen-Entfernungen D, 2D, 3D ... bedeutet. Der beispielhaft dargestellte Empfangsimpuls $E_{i,k-2}$ des Sendeimpulses $S_{i,k-2}$, welcher in die Blind Range 15 zwischen der MTA-Zone 1 und der MTA-Zone 2 fällt, könnte somit vom Laserscanner 1 nicht empfangen und verarbeitet werden.

Um dies zu verhindern, wird die in einem Teilabschnitt $A_n$ einer aktuellen Abtastzeile $L_i$ jeweils verwendete Impulswiederholrate $PRR_n$ nun zusätzlich auch so modifiziert, dass die in diesem Teilabschnitt $A_n$ erwarteten Emp-fangsimpulse $E_{i,k}$, das ist in dem Beispiel der Fig. 8 und 11 z.B. der Empfangsimpuls $E_{i,k-1}$, mit den dort auszusendenden Sendeimpulsen $S_{i,k}$, das ist in dem Beispiel der Fig. 8 und 11 z.B. der Sendeimpuls $S_{i,k}$, nicht innerhalb der Blind-Range-Zeitfenster ("Toleranzzeitfenster") 15 kollidieren.

In dem in den Fig. 8 und 11 gezeigten Beispiel wird die Impulswiederholrate $PRR_n$ gegenüber der vorherigen Impulswiederholrate $PRR_{n-1}$ reduziert, d.h. der Impulsabstand $\tau_n = 1/PRR_n$ gegenüber dem Impulsabstand $\tau_{n-1} = 1/PRR_{n-1}$ um $\Delta\tau$ erhöht. Damit fällt nun der Empfangsimpuls $E_{i,k-1}$ nicht mehr in das Blind-Range-Zeitfenster 15 des Sendeimpulses $S_{i,k}$, und der Empfangsimpuls $E_{i,k}$ nicht mehr in des Blind-Range-Zeitfenster 15 des Sendeimpulses $S_{i,k+1}$. Es versteht sich, dass die Impulswiederholrate $PRR_n$ auch entsprechend erhöht werden könnte, also der Impuls-abstand $\tau_n$ um $\Delta\tau$ gegenüber $\tau_{n-1}$ verringert werden könnte, so dass der Empfangsimpuls $E_{i,k-1}$ erst nach dem Blind-Range-Zeitfenster 15 des Sendeimpulses $S_{i,k}$ einlangt, usw.

Zurückkehrend zu Fig. 8 wird für die in Fig. 11 gezeigte Veränderung der Impulswiederholrate $PRR_n$ eines Teilabschnitts $A_n$ einer aktuellen Abtastzeile $L_i$ ein - gegebenenfalls gemittelter und/oder extrapolierter - Entfernungsmesswert, z.B. hier der Entfernungsmesswert $d_{i-1,k}$ des Abtastpunkts $P_{i-1,k}$, zumindest einer vorhergehenden Abtastzeile, z.B. hier der Abtastzeile $L_{i-1}$, herangezogen. Dies erfolgt insbesondere so, dass der durch die geplante neue Impuls-wiederholrate $PRR_n$ definierte Sendezeitpunkt $TS_{i,k}$ eines Laserimpulses $S_{i,k}$ in diesem Teilabschnitt $A_n$ der aktuellen Abtastzeile $L_i$ einen zeitlichen Mindestabstand $\Delta\tau$ zum (bloß) berechneten (gegebenenfalls wie erörtert gemittelten und/oder extrapolierten) Empfangszeitpunkt $TE'_{i-1,k-1}$ eines (bloß) berechneten (gegebenenfalls wie erörtert gemittelten und/oder extrapolierten) Empfangsimpulses $E'_{i-1,k-1}$ hat (Fig. 11), der von einem vorhergehenden Sendeimpuls $S_{i,k-1}$ der aktuellen Abtastzeile $L_i$ stammt und von einem Abtastpunkt $P_{i-1,k}$ desselben Teilabschnitts $A_n$ zumindest einer vorhergehenden Abtastzeile, hier der Abtastzeile $L_{i-1}$, reflektiert worden wäre.

Mit anderen Worten wird eine historische Abtastzeile $L_{i-1}$, $L_{i-2}$, ... verwendet, um einen Schätzwert $TE'_{i-1,k-1}$ für einen fiktiven Empfangsimpuls $E'_{i-1,k-1}$ in der aktuellen Abtastzeile $L_i$ zu erzeugen, gegenüber dem der Sendezeitpunkt $TS_{i,k}$ des auszusendenden Sendeimpulses $S_{i,k}$ um den Mindestabstand $\Delta\tau$ vor- oder nachversetzt wird, also die Impuls-wiederholrate $PRR_n$ modifiziert wird, um das Eintreffen des tatsächlichen Empfangsimpulses $E_{i,k-1}$ in einem Blind-Range-Zeitfenster 15 eines vorhergehenden Sendeimpulses $S_{i,k-1}$ zu vermeiden.

Es versteht sich, dass durch die optionale Variation der Impulswiederholrate zur Vermeidung der Blind Ranges unter Umständen in Teilbereichen der Umgebung nicht gleichzeitig das Ziel einer gleichmäßigen lokalen Dichte der Abtastpunkte $P_{i,k}$ überall in der Umgebung erreicht werden kann, d.h. die Dichte unter Umständen in diesen Teilbereichen lokal abweicht; dies ist jedoch einem gänzlichen Ausfall von Abtastpunkten in diesen Teilbereichen vorzuziehen.

Die Erfindung ist nicht auf die dargestellten Ausführungsformen beschränkt, sondern umfasst alle Varianten, Modifikationen und deren Kombination, die in den Rahmen der angeschlossenen Ansprüche fallen.

**Patentansprüche**

1. Laserscanner zum Vermessen einer Umgebung, der dazu ausgebildet ist, mit einer variablen Impulswiederholrate ($PRR_n$) Laserimpulse ($S_{i,k}$) als zeilenweise mit einer Winkelgeschwindigkeit ($\omega$) über die Umgebung (4) geführten Messstrahl (5) auszusenden, um aufeinanderfolgende Abtastzeilen ($L_i$) von Abtastpunkten ($P_{i,k}$) zu erzeugen und für jeden Abtastpunkt ($P_{i,k}$) durch Laufzeitmessung des daran reflektierten Laserimpulses ($S_{i,k}$) einen Entfernungsmesswert ($d_{i,k}$) zum Laserscanner (1) zu ermitteln, wobei die Impulswiederholrate ($PRR_n$) in zumindest einem Teilabschnitt ($A_n$) einer aktuellen Abtastzeile ($L_i$) von zumindest einem Entfernungsmesswert ($d_{i,k}$) zumindest einer vorhergehenden Abtastzeile ($L_i$) abhängt, **dadurch gekennzeichnet, dass** die genannte Abhängigkeit der Impulswiederholrate ($PRR_n$) derart gewählt ist,

   dass die Abtastpunkte ($P_{i,k}$) in der aktuellen Abtastzeile ($L_i$) im Wesentlichen gleiche Abstände ($a_{i,k}$) haben, und/oder
   dass die lokale Dichte der Abtastpunkte ($P_{i,k}$) in einer Draufsicht der Umgebung (4) in Lotrichtung zumindest über mehrere aufeinanderfolgende Abtastzeilen ($L_i$) im Wesentlichen konstant ist.

2. Laserscanner nach Anspruch 1, **dadurch gekennzeichnet, dass** jede Abtastzeile ($L_i$) in dieselbe Anzahl (Z) von Teilabschnitten ($A_n$) unterteilt ist, und dass die Impulswiederholrate ($PRR_n$) in jedem Teilabschnitt ($A_n$) einer aktuellen Abtastzeile ($L_i$) von zumindest einem Entfernungsmesswert ($d_{i,k}$) desselben Teilabschnitts ($A_n$) zumindest einer vorhergehenden Abtastzeile ($L_i$) abhängt.

3. Laserscanner nach Anspruch 1 oder 2, **dadurch gekennzeichnet, dass** die genannte Abhängigkeit der Impulswiederholrate ($PRR_n$) derart gewählt ist, dass die ausgesandten Laserimpulse ($S_{i,k}$) im Laserscanner (1), jeweils innerhalb eines Toleranzzeitfensters (15), nicht mit den reflektierten Laserimpulsen ($E_{i,k}$) zusammentreffen.

4. Laserscanner nach Anspruch 3, **dadurch gekennzeichnet, dass** jede Abtastzeile ($L_i$) in dieselbe Anzahl (Z) von Teilabschnitten ($A_n$) unterteilt ist, und dass die genannte Abhängigkeit der Impulswiederholrate ($PRR_n$) derart gewählt ist, dass der Sendezeitpunkt ($TS_{i,k}$) eines Laserimpulses ($S_{i,k}$) im genannten Teilabschnitt ($A_n$) der aktuellen Abtastzeile ($L_i$) einen zeitlichen Mindestabstand ($\Delta\tau$) zum Empfangszeitpunkt ($TE_{i,k}$) eines berechneten Impulses ($E'_{i,k}$) hat, der zum Sendezeitpunkt ($TS_{i,k}$) eines vorhergehenden Laserimpulses ($S_{i,k}$) der aktuellen Abtastzeile ($L_i$) ausgesandt und von einem Abtastpunkt ($P_{i,k}$) desselben Teilabschnitts ($A_n$) einer vorhergehenden Abtastzeile ($L_i$) reflektiert würde.

5. Laserscanner nach einem der Ansprüche 1 bis 4, **dadurch gekennzeichnet, dass** jede Abtastzeile ($L_i$) in dieselbe Anzahl (Z) von Teilabschnitten ($A_n$) unterteilt ist, und dass die Impulswiederholrate ($PRR_n$) im genannten Teilabschnitt ($A_n$) der aktuellen Abtastzeile ($L_i$) von einem Mittelwert von Entfernungsmesswerten ($d_{i,k}$) desselben Teilabschnitts ($A_n$) zumindest einer vorhergehenden Abtastzeile ($L_i$) abhängt.

6. Laserscanner nach einem der Ansprüche 1 bis 5, **dadurch gekennzeichnet, dass** jede Abtastzeile ($L_i$) in dieselbe Anzahl (Z) von Teilabschnitten ($A_n$) unterteilt ist, und dass die Impulswiederholrate ($PRR_n$) im genannten Teilabschnitt ($A_n$) der aktuellen Abtastzeile ($L_i$) von einem Extrapolationswert von Entfernungsmesswerten ($d_{i,k}$) desselben Teilabschnitts ($A_n$) zumindest zweier vorhergehender Abtastzeilen ($L_i$) abhängt.

7. Laserscanner nach einem der Ansprüche 1 bis 6, **dadurch gekennzeichnet, dass** die Impulswiederholrate ($PRR_n$) in einem Teilabschnitt ($A_n$) der aktuellen Abtastzeile ($L_i$) auch von der Winkelgeschwindigkeit ($\omega$), mit welcher der Messstrahl (5) in diesem Teilabschnitt ($A_n$) über die Umgebung (4) geführt ist, abhängt.

8. Verfahren zum Vermessen einer Umgebung (4) mittels eines Laserscanners (1), der mit einer variablen Impulswiederholrate ($PRR_n$) Laserimpulse ($S_{i,k}$) als zeilenweise mit einer Winkelgeschwindigkeit ($\omega$) über die Umgebung (4) geführten Messstrahl (5) aussendet, um aufeinanderfolgende Abtastzeilen ($L_i$) von Abtastpunkten ($P_{i,k}$) zu erzeugen, wobei für jeden Abtastpunkt ($P_{i,k}$) durch Laufzeitmessung des daran reflektierten Laserimpulses ($S_{i,k}$) ein Entfernungsmesswert ($d_{i,k}$) zum Laserscanner (1) ermittelt wird, und wobei die Impulswiederholrate ($PRR_n$) in zumindest

einem Teilabschnitt ($A_n$) einer aktuellen Abtastzeile ($L_i$) von zumindest einem Entfernungsmesswert ($d_{i,k}$) zumindest einer vorhergehenden Abtastzeile ($L_i$) abhängt, **dadurch gekennzeichnet, dass** die genannte Abhängigkeit der Impulswiederholrate ($PRR_n$) derart gewählt ist,

dass die Abtastpunkte ($P_{i,k}$) in der aktuellen Abtastzeile ($L_i$) im Wesentlichen gleiche Abstände ($a_{i,k}$) haben, und/oder
dass die lokale Dichte der Abtastpunkte ($P_{i,k}$) in einer Draufsicht der Umgebung (4) in Lotrichtung über die Umgebung (4) im Wesentlichen konstant ist.

9. Verfahren nach Anspruch 8, **dadurch gekennzeichnet, dass** jede Abtastzeile ($L_i$) in dieselbe Anzahl von Teilabschnitten ($A_n$) unterteilt ist, und dass die Impulswiederholrate ($PRR_n$) in jedem Teilabschnitt ($A_n$) einer aktuellen Abtastzeile ($L_i$) von zumindest einem Entfernungsmesswert ($d_{i,k}$) desselben Teilabschnitts ($A_n$) zumindest einer vorhergehenden Abtastzeile ($L_i$) abhängt.

10. Verfahren nach Anspruch 8 oder 9, **dadurch gekennzeichnet, dass** die genannte Abhängigkeit der Impulswiederholrate ($PRR_n$) derart gewählt ist, dass die ausgesandten Laserimpulse ($S_{i,k}$) im Laserscanner (1), jeweils innerhalb eines Toleranzzeitfensters (15), nicht mit den reflektierten Laserimpulsen ($E_{i,k}$) zusammentreffen.

11. Verfahren nach Anspruch 10, **dadurch gekennzeichnet, dass** jede Abtastzeile ($L_i$) in dieselbe Anzahl von Teilabschnitten ($A_n$) unterteilt ist, und dass die genannte Abhängigkeit der Impulswiederholrate ($PRR_n$) derart gewählt ist, dass der Sendezeitpunkt ($TS_{i,k}$) eines Laserimpulses ($S_{i,k}$) im genannten Teilabschnitt ($A_n$) der aktuellen Abtastzeile ($L_i$) einen zeitlichen Mindestabstand ($\Delta\tau$) zum Empfangszeitpunkt ($TE_{i,k}$) eines berechneten Impulses ($E'_{i,k}$) hat, der zum Sendezeitpunkt ($TS_{i,k}$) eines vorhergehenden Laserimpulses ($S_{i,k}$) der aktuellen Abtastzeile ($L_i$) ausgesandt und von einem Abtastpunkt ($P_{i,k}$) desselben Teilabschnitts ($A_n$) einer vorhergehenden Abtastzeile ($L_i$) reflektiert würde.

12. Verfahren nach einem der Ansprüche 8 bis 11, **dadurch gekennzeichnet, dass** jede Abtastzeile ($L_i$) in dieselbe Anzahl von Teilabschnitten ($A_n$) unterteilt ist, und dass die Impulswiederholrate ($PRR_n$) im genannten Teilabschnitt ($A_n$) der aktuellen Abtastzeile ($L_i$) von einem Mittelwert von Entfernungsmesswerten ($d_{i,k}$) desselben Teilabschnitts ($A_n$) zumindest einer vorhergehenden Abtastzeile ($L_i$) abhängt und/oder von einem Extrapolationswert von Entfernungsmesswerten ($d_{i,k}$) desselben Teilabschnitts ($A_n$) zumindest zweier vorhergehender Abtastzeilen ($L_i$) abhängt.

## Claims

1. Laser scanner for measuring an environment, which is configured to emit laser pulses ($S_{i,k}$) with a variable pulse repetition rate ($PRR_n$) as a measuring beam (5) that is scanned line by line at an angular velocity ($\omega$) over the environment (4), in order to generate successive scan lines ($L_i$) of scan points ($P_{i,k}$) and to determine for each scan point ($P_{i,k}$), by measuring the runtime of the laser pulse ($S_{i,k}$) reflected thereon, a distance measurement value ($d_{i,k}$) to the laser scanner (1), wherein the pulse repetition rate ($PRR_n$) in at least one sub-section ($A_n$) of a current scan line ($L_i$) depends on at least one distance measurement value ($d_{i,k}$) of at least one preceding scan line ($L_i$), **characterized in that** said dependency of the pulse repetition rate ($PRR_n$) is selected such

that the scan points ($P_{i,k}$) in the current scan line ($L_i$) have substantially the same distances ($a_{i,k}$), and/or
that the local density of the scan points ($P_{i,k}$) in a plan view of the environment (4) in the vertical direction is substantially constant at least over a number of successive scan lines ($L_i$).

2. Laser scanner according to claim 1, **characterized in that** each scan line ($L_i$) is divided into the same number ($Z$) of sub-sections ($A_n$), and that the pulse repetition rate ($PRR_n$) in each sub-section ($A_n$) of a current scan line ($L_i$) depends on at least one distance measurement value ($d_{i,k}$) of the same sub-section ($A_n$) of at least one preceding scan line ($L_i$).

3. Laser scanner according to claim 1 or 2, **characterized in that** said dependency of the pulse repetition rate ($PRR_n$) is selected such that the emitted laser pulses ($S_{i,k}$) in the laser scanner (1), each within a tolerance time window (15), do not coincide with the reflected laser pulses ($E_{i,k}$).

4. Laser scanner according to claim 3, **characterized in that** each scan line ($L_i$) is divided into the same number ($Z$) of sub-sections ($A_n$), and that said dependency of the pulse repetition rate ($PRR_n$) is selected such that the transmission time ($TS_{i,k}$) of a laser pulse ($S_{i,k}$) in said sub-section ($A_n$) of the current scan line ($L_i$) has a temporal minimum distance ($\Delta\tau$) to the reception time ($TE_{i,k}$) of a calculated pulse ($E'_{i,k}$) that would be emitted at the transmission time ($TS_{i,k}$) of a preceding laser pulse ($S_{i,k}$) of the current scan line ($L_i$) and would be reflected by a scan point ($P_{i,k}$) of the same sub-section ($A_n$) of a preceding scan line ($L_i$).

5.   Laser scanner according to any one of claims 1 to 4, **characterized in that** each scan line ($L_i$) is divided into the same number ($Z$) of sub-sections ($A_n$), and that the pulse repetition rate ($PRR_n$) in said sub-section ($A_n$) of the current scan line (Li) depends on an average of distance measurement values ($d_{i,k}$) of the same sub-section ($A_n$) of at least one preceding scan line ($L_i$).

6.   Laser scanner according to any one of claims 1 to 5, **characterized in that** each scan line ($L_i$) is divided into the same number ($Z$) of sub-sections ($A_n$) and that the pulse repetition rate ($PRR_n$) in said sub-section ($A_n$) of the current scan line ($L_i$) depends on an extrapolation value of distance measurement values ($d_{i,k}$) of the same sub-section ($A_n$) of at least two preceding scan lines ($L_i$).

7.   Laser scanner according to any one of claims 1 to 6, **characterized in that** the pulse repetition rate ($PRR_n$) in a sub-section ($A_n$) of the current scan line ($L_i$) also depends on the angular velocity ($\omega$) with which the measuring beam (5) in this sub-section ($A_n$) is scanned over the environment (4).

8.   Method for measuring an environment (4) by means of a laser scanner (1), which emits laser pulses ($S_{i,k}$) with a variable pulse repetition rate ($PRR_n$) as a measuring beam (5) that is scanned line by line at an angular velocity ($\omega$) over the environment (4), in order to generate successive scan lines ($L_i$) of scan points ($P_{i,k}$), wherein for each scan point ($P_{i,k}$), by measuring the runtime of the laser pulse ($S_{i,k}$) reflected thereon, a distance measurement value ($d_{i,k}$) to the laser scanner (1) is determined, and wherein the pulse repetition rate ($PRR_n$) in at least one sub-section ($A_n$) of a current scan line ($L_i$) depends on at least one distance measurement value ($d_{i,k}$) of at least one preceding scan line ($L_i$), **characterized in that** said dependency of the pulse repetition rate ($PRR_n$) is selected such

that the scan points ($P_{i,k}$) in the current scan line ($L_i$) have substantially the same distances ($a_{i,k}$), and/or that the local density of the scan points ($P_{i,k}$) in a plan view of the environment (4) in the vertical direction is substantially constant over the environment (4).

9.   Method according to claim 8, **characterized in that** each scan line ($L_i$) is divided into the same number of sub-sections ($A_n$), and that the pulse repetition rate ($PRR_n$) in each sub-section ($A_n$) of a current scan line ($L_i$) depends on at least one distance measurement value ($d_{i,k}$) of the same sub-section ($A_n$) of at least one preceding scan line ($L_i$).

10.  Method according to claim 8 or 9, **characterized in that** said dependency of the pulse repetition rate ($PRR_n$) is selected such that the emitted laser pulses ($S_{i,k}$) in the laser scanner (1), each within a tolerance time window (15), do not coincide with the reflected laser pulses ($E_{i,k}$).

11.  Method according to claim 10, **characterized in that** each scan line ($L_i$) is divided into the same number of sub-sections ($A_n$), and that said dependency of the pulse repetition rate ($PRR_n$) is selected such that the transmission time ($TS_{i,k}$) of a laser pulse ($S_{i,k}$) in said sub-section ($A_n$) of the current scan line ($L_i$) has a temporal minimum distance ($\Delta\tau$) to the reception time ($TE_{i,k}$) of a calculated pulse ($E'_{i,k}$) that would be emitted at the transmission time ($TS_{i,k}$) of a preceding laser pulse ($S_{i,k}$) of the current scan line ($L_i$) and would be reflected by a scan point ($P_{i,k}$) of the same sub-section ($A_n$) of a preceding scan line ($L_i$).

12.  Method according to any one of claims 8 to 11, **characterized in that** each scan line ($L_i$) is divided into the same number of sub-sections ($A_n$), and that the pulse repetition rate ($PRR_n$) in said sub-section ($A_n$) of the current scan line ($L_i$) depends on an average of distance measurement values ($d_{i,k}$) of the same sub-section ($A_n$) of at least one preceding scan line ($L_i$) and/or on an extrapolation value of distance measurement values ($d_{i,k}$) of the same sub-section ($A_n$) of at least two preceding scan lines ($L_i$).

**Revendications**

1.   Scanner laser, permettant de mesurer un environnement, qui est conçu pour émettre, avec une fréquence de répétition des impulsions ($PRR_n$) variable, des impulsions laser ($S_{i,k}$) sous forme d'un rayonnement de mesure (5) mené sur l'environnement (4), ligne par ligne, avec une vitesse angulaire ($\omega$), afin de créer des lignes de balayage

(L$_i$) consécutives de points de balayage (P$_{i,k}$) et déterminer, pour chaque point de balayage (P$_{i,k}$), par une mesure du temps de vol de l'impulsion laser (S$_{i,k}$) s'y réfléchissant, une valeur de mesure d'éloignement (d$_{i,k}$) par rapport au scanner laser (1), dans lequel la fréquence de répétition des impulsions (PRR$_n$) dans au moins un segment partiel (A$_n$) d'une ligne de balayage (L$_i$) actuelle dépend au moins d'une valeur de mesure d'éloignement (d$_{i,k}$) d'au moins une ligne de balayage (L$_i$) précédente, **caractérisé en ce que** ladite dépendance de la fréquence de répétition des impulsions (PRR$_n$) est choisie de telle manière

que les points de balayage (P$_{i,k}$) dans la ligne de balayage (L$_i$) actuelle ont essentiellement les mêmes intervalles (a$_{i,k}$), et/ou

que la densité locale des points de balayage (P$_{i,k}$) dans une vue plongeante de l'environnement (4) dans la direction d'aplomb est essentiellement constante au moins sur plusieurs lignes de balayage (L$_i$) consécutives.

2. Scanner laser selon la revendication 1, **caractérisé en ce que** chaque ligne de balayage (L$_i$) est subdivisée en un même nombre (Z) de segments partiels (A$_n$) et que la fréquence de répétition des impulsions (PRR$_n$) dans chaque segment partiel (A$_n$) d'une ligne de balayage (L$_i$) actuelle dépend d'au moins une valeur de mesure d'éloignement (d$_{i,k}$) du même segment partiel (A$_n$) d'au moins une ligne de balayage (L$_i$) précédente.

3. Scanner laser selon la revendication 1 ou 2, **caractérisé en ce que** ladite dépendance de la fréquence de répétition des impulsions (PRR$_n$) est choisie de telle manière que les impulsions lasers émises (S$_{i,k}$) dans le scanner laser (1) ne rencontrent pas les impulsions laser réfléchies (E$_{i,k}$) respectivement dans une fenêtre temporelle de tolérance (15).

4. Scanner laser selon la revendication 3, **caractérisé en ce que** chaque ligne de balayage (L$_i$) est subdivisée en un même nombre (Z) de segments partiels (A$_n$) et que ladite dépendance de la fréquence de répétition des impulsions (PRR$_n$) est choisie de telle manière que l'instant de l'émission (TS$_{i,k}$) d'une impulsion laser (S$_{i,k}$) dans ledit segment partiel (A$_n$) de la ligne de balayage (L$_i$) actuelle a un intervalle temporel minimal ($\Delta\tau$) par rapport à l'instant de réception (TE$_{i,k}$) d'une impulsion (E'$_{i,k}$) calculée qui aurait été émise à l'instant d'émission (TS$_{i,k}$) d'une impulsion laser (S$_{i,k}$) précédente de la ligne de balayage (L$_i$) actuelle et aurait été réfléchie par un point de balayage (P$_{i,k}$) du même segment partiel (A$_n$) d'une ligne de balayage (L$_i$) précédente.

5. Scanner laser selon l'une des revendications 1 à 4, **caractérisé en ce que** chaque ligne de balayage (L$_i$) est subdivisée en un même nombre (Z) de segments partiels (A$_n$) et que la fréquence de répétition des impulsions (PRR$_n$) dans ledit segment partiel (A$_n$) de la ligne de balayage (L$_i$) actuelle dépend d'une valeur moyenne de valeurs de mesure d'éloignement (d$_{i,k}$) du même segment partiel (A$_n$) d'au moins une ligne de balayage (L$_i$) précédente.

6. Scanner laser selon l'une des revendications 1 à 5, **caractérisé en ce que** chaque ligne de balayage (L$_i$) est subdivisée en un même nombre (Z) de segments partiels (A$_n$) et que la fréquence de répétition des impulsions (PRR$_n$) dans ledit segment partiel (A$_n$) de la ligne de balayage (L$_i$) actuelle dépend d'une valeur d'extrapolation de valeurs de mesure d'éloignement (d$_{i,k}$) du même segment partiel (A$_n$) d'au moins deux lignes de balayage (L$_i$) précédentes.

7. Scanner laser selon l'une des revendications 1 à 6, **caractérisé en ce que** la fréquence de répétition des impulsions (PRR$_n$) dans un segment partiel (A$_n$) de la ligne de balayage (L$_i$) actuelle dépend également de la vitesse angulaire ($\omega$) avec laquelle le rayonnement de mesure (5) est mené dans ce segment partiel (A$_n$) sur l'environnement (4).

8. Procédé de mesure d'un environnement (4) au moyen d'un scanner laser (1) qui émet, avec une fréquence de répétition des impulsions (PRR$_n$) variable, des impulsions laser (S$_{i,k}$) sous forme d'un rayonnement de mesure (5) mené sur l'environnement (4), ligne par ligne, avec une vitesse angulaire ($\omega$), afin de créer des lignes de balayage (L$_i$) consécutives de points de balayage (P$_{i,k}$), dans lequel, pour chaque point de balayage (P$_{i,k}$), par la mesure du temps de vol de l'impulsion laser (S$_{i,k}$) s'y réfléchissant, on détermine une valeur de mesure d'éloignement (d$_{i,k}$) par rapport au scanner laser (1), et dans lequel la fréquence de répétition des impulsions (PRR$_n$) dans au moins un segment partiel (A$_n$) d'une ligne de balayage (L$_i$) actuelle dépend au moins d'une valeur de mesure d'éloignement (d$_{i,k}$) d'au moins une ligne de balayage (L$_i$) précédente, **caractérisé en ce que** ladite dépendance de la fréquence de répétition des impulsions (PRR$_n$) est choisie de telle manière

que les points de balayage (P$_{i,k}$) dans la ligne de balayage (L$_i$) actuelle ont essentiellement les mêmes intervalles (a$_{i,k}$), et/ou
que la densité locale des points de balayage (P$_{i,k}$) dans une vue plongeante de l'environnement (4) est essentiellement constante sur l'environnement (4) dans la direction d'aplomb.

9. Procédé selon la revendication 8, **caractérisé en ce que** chaque ligne de balayage ($L_i$) est subdivisée en un même nombre de segments partiels ($A_n$) et que la fréquence de répétition des impulsions ($PRR_n$) dans chaque segment partiel ($A_n$) de la ligne de balayage ($L_i$) actuelle dépend au moins d'une valeur de mesure d'éloignement ($d_{i,k}$) du même segment partiel ($A_n$) d'au moins une ligne de balayage ($L_i$) précédente.

10. Procédé selon la revendication 8 ou 9, **caractérisé en ce que** ladite dépendance de la fréquence de répétition des impulsions ($PRR_n$) est choisie de telle manière que les impulsions laser émises ($S_{i,k}$) dans le scanner laser (1) ne se rencontrent pas avec les impulsions laser ($E_{i,k}$) réfléchies respectivement dans une fenêtre temporelle de tolérance (15).

11. Procédé selon la revendication 10, **caractérisé en ce que** chaque ligne de balayage ($L_i$) est subdivisée en un même nombre de segments partiels ($A_n$) et que ladite dépendance de la fréquence de répétition des impulsions ($PRR_n$) est choisie de telle manière que l'instant de l'émission ($TS_{i,k}$) d'une impulsion laser ($S_{i,k}$) dans ledit segment partiel ($A_n$) de la ligne de balayage ($L_i$) actuelle a un intervalle temporel minimal ($\Delta\tau$) par rapport à l'instant de réception ($TE_{i,k}$) d'une impulsion ($E'_{i,k}$) calculée qui aurait été émise à l'instant d'émission ($TS_{i,k}$) d'une impulsion laser ($S_{i,k}$) précédente de la ligne de balayage ($L_i$) actuelle et aurait été réfléchie par un point de balayage ($P_{i,k}$) du même segment partiel ($A_n$) d'une ligne de balayage ($L_i$) précédente.

12. Procédé selon l'une des revendications 8 à 11, **caractérisé en ce que** chaque ligne de balayage ($L_i$) est subdivisée en un même nombre de segments partiels ($A_n$) et que ladite dépendance de la fréquence de répétition des impulsions ($PRR_n$) dans ledit segment partiel ($A_n$) de la ligne de balayage ($L_i$) actuelle dépend d'une valeur moyenne de valeurs de mesure d'éloignement ($d_{i,k}$) du même segment partiel ($A_n$) d'au moins une ligne de balayage ($L_i$) précédente et/ou dépend d'une valeur d'extrapolation de valeurs de mesure d'éloignement ($d_{i,k}$) du même segment partiel ($A_n$) d'au moins deux lignes de balayage ($L_i$) précédentes.

**Fig. 1**

**Fig. 2**

**Fig. 3**

**Fig. 4**

**Fig. 5**

*Fig. 6*

*Fig. 7*

**Fig. 8**

**Fig. 10**

**Fig. 9**

*Fig. 11*

**EP 3 929 617 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170269209 A1